(19) Europäisches Patentamt
European Patent Office
Office européen des brevets

(11) **EP 2 806 399 A1**

(12) **EUROPEAN PATENT APPLICATION**

(43) Date of publication:
**26.11.2014 Bulletin 2014/48**

(51) Int Cl.:
***G06T 7/00*** *(2006.01)*

(21) Application number: **13305672.1**

(22) Date of filing: **23.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **bioMérieux**
 **69280 Marcy-L'Etoile (FR)**
• **Commissariat à l'Énergie Atomique et aux Énergies Alternatives**
 **75015 Paris (FR)**

(72) Inventors:
• **Allano, Lorène**
 **92310 Sèvres (FR)**
• **Kyrgyzova, Khrystyna**
 **92330 Sceaux (FR)**

(74) Representative: **de Zeeuw, Johan Diederick**
**Murgitroyd & Company**
**Immeuble Atlantis**
**55, Allée Pierre Ziller**
**Sophia Antipolis**
**06560 Valbonne (FR)**

(54) **Method, system and computer program product for producing a raised relief map from images of an object**

(57) A method for obtaining a model of an object surface from a plurality of images of said object, wherein the object is illuminated with one or more illumination sources, the method comprising:
- obtaining a set of images each comprising an array of pixels and representing similar views of an object, wherein the similar views are obtained under different illumination conditions;
- defining a model function that expresses the known pixel intensity values of the images in terms of the following unknown model components:
- a first model component (A) representing the albedo of the object;
- a second model component (L) representing an intensity of illumination;
- a third model component (V) representing an illumination direction and being different for each image;
- a fourth model component (N) representing surface normal directions of the object surface at each pixel position and being the same for all images;
- performing one or more sequences of minimization operations to minimize a difference function between the pixel values obtained from the set of images and pixel values calculated using said model function, each minimization operation being performed by allowing one of said model components (A, L, V, N) to vary while the others remain unchanged;
- outputting the fourth model component (N) as said model of the object surface.

*FIG. 3*

**Description**

**Field of the Invention**

The present invention relates to a method, system and computer program product for producing a raised relief map of the surface of an object from a plurality of images of the object.

**Background of the Invention**

In the domain of image processing, the photometric stereo method is a well-known method for producing a raised relief map of the surface of an object. The photometric stereo method operates by using a plurality of images of an object taken with a camera in a fixed position, with one or more illumination sources providing different directions of illumination. The aim of the photometric stereo method is to provide a raised relief map of the surface of an object by applying a specific algorithm to data related to images being taken. In the domain of biological analysis, for example, the objects comprise micro-organisms. The raised relief maps of objects such as micro-organisms obtained using such a method allow several characteristics of the micro-organisms to be identified, such as the texture of the surface and the type of relief. Thus, the algorithm generates a raised relief map or a deepness map of the surface of the object.

In addition, in the specific domain of biological analysis, in vitro analysis of a biological sample is performed to determine the type of micro-organism potentially present in the biological sample. A specific environment is associated with the biological sample to allow the growth of micro-organisms. The specific environment can be located, for example, in a Petri dish. After incubation of a Petri dish comprising a biological sample, the surface of the Petri dish is illuminated with an imaging system as described in published European application EP2520923. The imaging system comprises several illumination sources located around the biological sample. Each illumination source may illuminate the biological sample from a different direction. A fixed position camera may take different images of a same surface of the Petri dish. The plurality of illumination sources associated with different directions of illumination represents complex illumination conditions.

In the prior art, a well-known photometric stereo method described in Woodham, R.J. (1980): "Photometric method for determining surface orientation from multiple images", Optical engineering 19, pp. 513-531, applies an algorithm which takes into account three matrices related to three components describing image properties when illumination occurs. A first matrix A relates to albedo values which represent the ratio of incident illumination being reflected by the surface of the object. The matrix A comprises the same value for all the pixels as the entire surface is, presumably, made of the same material. A second matrix V represents the location of the illumination source for each image captured by the camera. A third matrix N represents the normal value of each pixel of each image in a three dimensional space. However, such an algorithm only operates if the illumination source is a point light source and if directions of illumination sources are known. In the domain of biological analysis, for example, the illumination sources are not point light sources and the location of the illumination sources are either unknown or not easy to model. Thus, the algorithm cannot be applied to such images. In addition, the optical properties or orientation of the surface of biological objects are not known. Thus, albedo values for such objects are not known. Furthermore, no parameter related to the intensity of the illumination sources is taken into account in such an algorithm. Thus, during the reconstruction process information regarding the properties of the surface of the object may be lacking or insufficient and lead to incorrect representation of the surface of the object. As a result, such an algorithm is not suitable for use in photometric stereo reconstruction of images taken in the domain of biological analysis or of any images taken with a fixed position camera and complex illumination conditions or unknown illumination directions.

A further prior art document, Hayakawa, H. (1994): "Photometric stereo under a light source with arbitrary motion", Society of America 11, pp. 3079-3088, discloses an improved algorithm for use in a photometric stereo method. The algorithm takes into account a fourth matrix related to value L which represents the various intensities of the illumination sources. However, such an algorithm only operates if the positions of illumination sources and/or normals of specific pixels of images are known. In some situations, such information is either not available or difficult to obtain. Thus, approximations are necessary to apply such an algorithm. As a result, such an algorithm is not suitable for generating an accurate image of a surface of an object if illumination conditions are unknown, as is the case in the domain of biological analysis. In addition, approximations may lead to incorrect representation of the image of the surface of the object at the end of the image reconstruction process.

As a result, there is a need to improve the standard photometric stereo method to allow the generation of a raised relief map of the surface of an object to enable the reconstruction of the surface of objects for which no prior information is available and which are associated with a plurality of illumination sources with different illumination directions.

## Objects of the Invention

It is an object of the present invention to overcome at least some of the problems associated with the prior art.

It is a further object of the invention to provide a method, system and computer program product for generating a raised relief map or a representation of the surface of an object by means of a photometric stereo method without using any information regarding the position and/or the direction of the illumination sources illuminating the object and without using any information regarding the normals of the surface of the object.

## Summary of the Invention

The present invention provides a method, system and computer program product for generating a raised relief map of an object as set out in the accompanying claims. According to one aspect of the invention, there is provided a method for obtaining a model of an object surface from a plurality of images of said object, wherein the object is illuminated with one or more illumination sources, the method comprising:

- obtaining a set of images each comprising an array of pixels and representing similar views of an object, wherein the similar views are obtained under different illumination conditions;
- defining a model function that expresses the known pixel intensity values of the images in terms of the following unknown model components:
- a first model component representing the albedo of the object at each pixel location and being the same for the plurality of images and being an albedo value;
- a second model component representing an intensity of illumination for each image and being an illumination source intensity value being the same for all pixels of each image;
- a third model component representing a specific illumination direction and being different for each image and being an illumination vector being the same for all pixels of each image;
- a fourth model component representing surface normal directions of the object surface at each pixel position and being the same for all images and being a normal vector;
- performing one or more sequences of minimization operations to minimize a difference function between the pixel values obtained from the set of images and pixel values calculated using said model function, each minimization operation being performed by allowing one of said model components to vary while the others remain unchanged;
- outputting the fourth model component as said model of the object surface.

Preferably, said sequence of minimization operations comprises an iterative loop in which each of said model components is varied in turn at least once before a subsequent iteration, said iterative loop being repeated until a termination condition is met.

Preferably, said iterative loop comprises one or more inner loops wherein a subset of said model components are varied plural times before proceeding to vary another subset of said model components.

Preferably, one inner loop comprises varying said third model component and said fourth model component plural times.

Preferably, one inner loop comprises varying said first model component and said second model component.

Preferably, minimization operations are performed, varying said third model component and said fourth model component plural times before minimization is performed, varying said first model component and said second model component.

Preferably, the first model component comprises a first model sub-component and a first structuring component, wherein the first structuring component adapts the first model sub-component to reproduce the surface properties of the object.

Preferably, the second model component comprises a second model sub-component and a second structuring component, wherein the second structuring component adapts the second model sub-component to reproduce the illumination conditions of the illumination sources.

Preferably, the third model component comprises a third model sub-component and a third structuring component, wherein the third structuring component adapts the third model sub-component to reproduce the illumination conditions of the illumination sources.

Preferably, the first structuring component represents a same coefficient for the plurality of images comprising the same albedo value for each pixel for the plurality of images.

Preferably, the second structuring component represents a same intensity coefficient for all pixels of an image from the plurality of images.

Preferably, the third structuring component represents the direction of illumination of one illumination source associated with one image of said plurality of images and being the same for all pixels of an image from the plurality of images.

Preferably, the one or more illumination sources comprise Red, Green and Blue color channels.

Preferably, the first model component is the same for each pixel and each color channel for the plurality of images and the second model component is the same for each color channel for all pixels of each image.

Preferably, the first structuring component comprises the same albedo value for each pixel for each color channel for the plurality of images.

Preferably, the second structuring component represents a same intensity coefficient for each color channel for all pixels of each image.

Preferably, model function comprises a modified model function, wherein the model function related to the first, second, third and fourth model components is equal to the modified model function related to the first, second and third model sub-components and the fourth model component.

According to a second aspect of the invention, there is provided a computer program product comprising instructions for causing a programmable data processing apparatus to perform steps of the method.

According to a third aspect of the invention, there is provided an imaging system for obtaining a model of an object surface from a plurality of images of said object, the imaging system comprising:

- one or more illumination sources to illuminate the object with different directions of illumination, wherein each image is associated with a determined direction of illumination;
- an image capture device for detecting the pixel values of each pixel in each image of the plurality of images;
- a data processor comprising a first memory component for storing the following unknown model components:

  - a first model component representing the albedo of the object at each pixel location and being the same for the plurality of images and being an albedo value;
  - a second model component representing an intensity of illumination for each image and being an illumination source intensity value and being the same for all pixels of each image;
  - a third model component representing a specific illumination direction and being different for each image and being an illumination vector and being the same for all pixels of each image;
  - a fourth model component representing surface normal directions of the object surface at each pixel position and being the same for all images and being a normal vector;

  wherein the data processor performs one or more sequences of minimization operations to minimize a difference function between the received pixel values over the set of images and pixel values calculated using a defined model function that expresses the known pixel values of images in terms of the unknown model components; and

  wherein each minimization operation is performed by allowing one of said model components to vary while the other model components remain fixed and
  for outputting the normal model component as said model of the object surface.

Preferably, the data processor further comprises a second memory component for storing structuring components to adapt one or more of the model sub-components to reproduce the surface properties of the object and the illumination conditions of the illumination sources.

**Brief Description of the Drawings**

Reference will now be made, by way of example, to the accompanying drawings, in which:

- Figure 1 shows a simplified diagram of the imaging system showing various types of illumination directions used for an object, according to an embodiment of the present invention;
- Figure 2 shows a simplified diagram of the imaging system showing the modules of the imaging system, according to an embodiment of the present invention;
- Figure 3 shows a mathematical formula, which models the photometric stereo method, according to an embodiment of the present invention;
- Figure 4 shows a mathematical formula, which models the photometric stereo method, according to another embodiment of the present invention;
- Figure 5 shows a flowchart of the method, according to an embodiment of the present invention;
- Figure 6 shows an example of an initial image of a first object, according to an embodiment of the present invention;
- Figure 7 shows an example of an initial image of a second object, according to an embodiment of the present invention;
- Figure 8 shows an example of an initial image of a third object, according to an embodiment of the present invention;

- Figure 9 shows an example of an initial image of a fourth object, according to an embodiment of the present invention;
- Figure 10 shows a raised relief map the first object of Figure 6, according to an embodiment of the present invention;
- Figure 11 shows a raised relief map the second object of Figure 7, according to an embodiment of the present invention;
- Figure 12 shows a raised relief map the third object of Figure 8, according to an embodiment of the present invention;
- Figure 13 shows a raised relief map the first object of Figure 9, according to an embodiment of the present invention;
- Figure 14 shows an example of an initial image of a fifth object, according to an embodiment of the present invention;
- Figure 15 shows a raised relief map of the fifth object when considering three initial images of the fifth object, according to an embodiment of the present invention;
- Figure 16 shows a raised relief map of the fifth object when considering five initial images of the fifth object, according to an embodiment of the present invention;
- Figure 17 shows a raised relief map of the fifth object when considering ten initial images of the fifth object, according to an embodiment of the present invention;
- Figures 18, 19, 20 and 21 show four initial images of a sixth object, each initial image relating to a different direction of illumination, according to an embodiment of the present invention;
- Figure 22 shows a top view of a raised relief map of the sixth object when considering the initial images of Figures 18, 19, 20 and 21, according to an embodiment of the present invention;
- Figure 23 shows a side view of the raised relief map of the sixth object as shown in Figure 22, according to an embodiment of the present invention;
- Figures 24, 25, 26 and 27 respectively show a side view of a raised relief map of various objects, according to an embodiment of the present invention.

## Detailed Description of the Invention

The description below discloses the invention in a sufficiently clear and complete manner, based on specific examples. However, the description should not be understood as limiting the scope of the protection to the specific embodiments and examples described below.

In the description below, the term "pixel value" or "pixel intensity value" refers to the detected value of the intensity of a pixel in an image.

In the description below, the term "initial image" or "image" refers to an image of an object. An object may be associated with a plurality of initial images. In the present invention, the number of initial images shall be at least equal to three. An initial image of the object corresponds to a specific illumination direction of an illumination source or to a main illuminating direction of a plurality of illumination sources. In addition, each initial image is taken with a fixed position camera at a determined location. The described embodiment comprises three initial images, i.e. images 1, 2 and 3, taken under different illumination directions with a camera having a fixed position. It should be understood that the present invention is also suitable for processing a plurality of initial images. Each initial image comprises a plurality of pixels and the three color channels in RGB space, i.e. red, green and blue. Calculations below only consider one pixel, such as pixel 1, in each initial image as an example. It is understood that calculations may also apply to the plurality of pixels of an initial image. The term "ni" refers to the number of initial images of an object. The term "np" refers to the number of pixels in each initial image.

In addition, in the description below, the word "object" may refer to any object being illuminated with various directions of illumination and wherein initial images of an object are taken with a fixed position camera. The object may correspond to one or more objects of small dimension such as micro-organisms or to objects of a greater dimension such as a bottle of water, animals, etc.

In the description below, the representation of the surface of the object with the raised relief map takes place in an orthonormal space x, y, z where z is a function of x and y, such as $z = f(x,y)$.

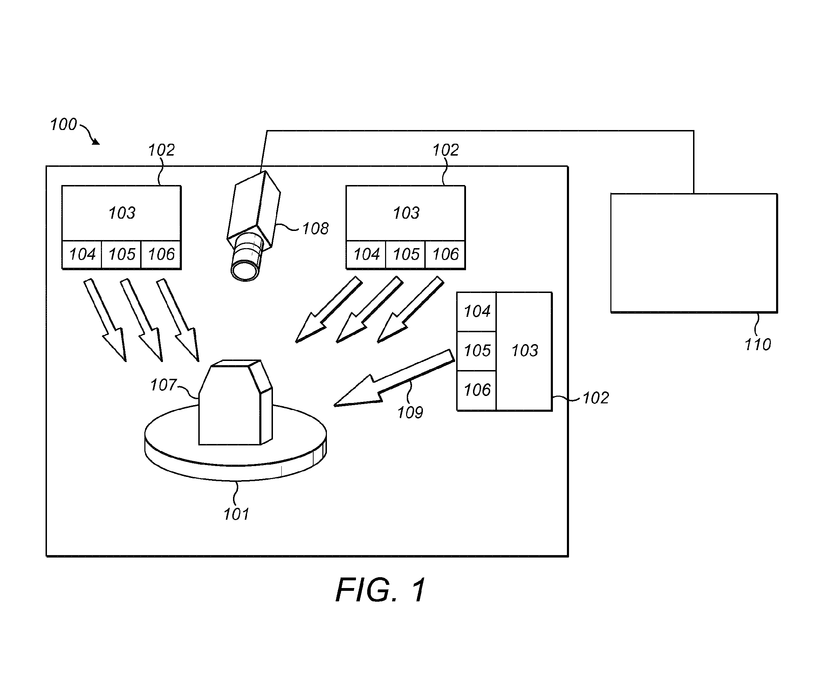

Figure 1 shows an imaging system 100 comprising one or more base units 102. Each base unit 102 includes the optics and control circuitry 103 for generating red (R), green (G) and blue (B) illumination related to RGB color channels. Each base unit 102 comprises corresponding red, green, blue illumination sources 104, 105, 106 which are all independently controllable. Illumination sources 104, 105, 106 may produce annular illumination, inverse annular illumination or lateral illumination, for example.

The imaging system 100 may optionally comprise a holding unit 101 for holding an object 107. Illumination sources 104, 105, 106 are located above the object.

Regarding the orientation of illumination sources 104, 105, 106, the optical axes of illumination sources 104, 105, 106 are arranged such that they apply illumination in a direction which is non-perpendicular to the object 107.

The imaging system 100 also includes an image capture device 108, such as a camera, which is directed towards the holding unit 101. Illumination from any combination of illumination sources 104, 105, 106 from any of the base units 102 can be directed towards the object. The image capture device 108 may then capture initial images of any object 107 which has been illuminated.

As shown in Figure 1, an annular beam 109 may also illuminate the object 107 and is produced by one of the base units 102.

The illumination sources 104, 105, 106 may be of any preferred type, such as light emitting diodes (LED) operating at red (R), green (G) and blue (B) frequencies; a simple white light source; an ultra-violet (UV) source or any other appropriate radiation source. The number of light sources in any location can vary from that shown and described herein. Each RGB illumination is made up of three LEDs operating at each respective frequency. Alternatively, one LED may produce the RGB illumination. For different illumination sources, there may be different combinations of RGB LEDs. Alternatively, a line or bar of diodes may be arranged to produce one illumination direction.

In addition to the control circuitry and optics 103 in each unit 102 which controls the function thereof, there may be an overall control system 110 comprising at least a computer, a display unit, processing modules and image enhancing algorithms and any other processes or techniques.

The control system 110 may be used to control which illumination sources are used for specific applications. In addition, the control system may apply different image enhancing techniques and image processing procedures for different applications. Image enhancing techniques are methods and techniques for enhancing the quality of an initial image or for making pertinent information visible for an expert to view in the biological domain, for example. Image processing relates to mathematical operations applied to an image matrix to provide the extraction of information from initial images in order to provide decision support or enable automatic decisions, for example.

The control system 110 may be used to carry out any other function and/or control operation for the imaging system 100. These include, but are not limited to:

- controlling the level of luminance;
- controlling the balance of the red, green, blue components;
- controlling exposure time;
- controlling illumination combinations;
- testing the system;
- calibrating the system; and
- any other appropriate control based on the use and purpose of the analysis.

The aim of the present invention is to propose an improved photometric stereo method for producing an image being a raised relief map of the surface of an object from a plurality of initial images of the object with no knowledge of the properties of the surface of the object and the illumination conditions.

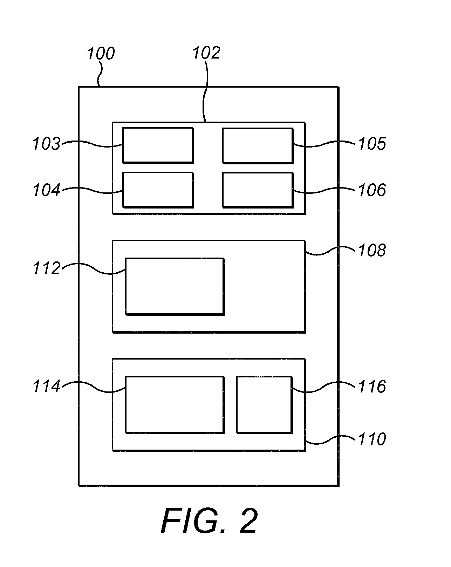

As shown in Figure 2, the image capture device 108 comprises an intensity detection device 112 for selecting each pixel in an image and determining the corresponding pixel value or intensity value I of the pixel. The intensity detection device 112 detects or observes the intensity of each pixel in a determined number of images and for each different color channel R, G, B to produce a matrix representing the detected or observed intensity values of all pixels for all the initial images.

In one embodiment, the intensity detection device 112 selects an initial image such as image 1. The intensity detection device 112 then selects a specific color channel, such as color channel R. The intensity detection device 112 detects the pixel value of each pixel in image 1 for color channel R. When considering specific examples of pixel 1 in image 1, the detected pixel values may refer to IR1(pixel1).

The intensity detection device 112 proceeds in the same manner with color channels G and B for image 1. In a similar manner, the detected pixel values may refer, for example, to IG1(pixel1) for color channel G and IB1(pixel 1) for color channel B.

The intensity detection device 112 then carries out the same steps for images 2 and 3. The intensity detection device 112 always selects corresponding pixels in all other initial images to determine the corresponding intensity of the same pixel in all the different initial images. It should be understood that the term "same pixel" means that the pixel is located at the same spatial location in all initial images. Thus, pixel 1 in image 1 is located at the same place as pixel 1 in images 2 and 3.

The detected pixel values refer to the following notations, for example when considering pixel1:

- for image 2:

  IR2(pixel1)
  IG2(pixel1)
  IB2(pixel 1);

- for image 3:

IR3(pixel1)
IG3(pixel1)
IB3(pixel 1).

The intensity detection device 112 may store the detected intensities in a corresponding matrix such as matrix IR1 which represents all pixel values for image 1 and associated color channel R.

In a similar manner, the pixel values of all pixels of image 1 associated with color channel G are organized in matrix IG1 and the pixel values of image 1 related to color channel B are arranged in matrix IB1.

In the same manner that pixel values corresponding to pixels of image 1 are arranged in matrices IR1, IG1 and IB1, the detected pixel values of all pixels for all images are arranged in corresponding matrices which refer, for example, to:

IR2, for color channel R and image 2
IR3, for color channel R and image 3
IG2, for color channel G and image 2
IG3, for color channel G and image 3
IB2, for color channel B and image 2
IB3, for color channel B and image 3.

Due to the amount of pixel values gathered in the corresponding matrix, the intensity detection device 112 may process an unwrapping step to convert the matrix into a vector comprising a line of data and thus facilitate further calculations based on the pixel values. Thus, matrix I has a number of rows which is equal to the number of initial images, where an initial image comprises three lines relating to the three color channels. Matrix I has a number of columns which is equal to the number of pixels being the same for each initial image.

The imaging system 100 also comprises a data processor 114 to carry out specific calculations based on pixel values and on a determined mathematical formula.

The imaging system 100 further comprises a first memory component 116 for storing a database of model components for storing four model components.

A first model component represents the albedo value of a pixel of an initial image associated with a first matrix A. The first matrix A comprises albedo values of pixels, each albedo value relating to the ratio of incident illumination being reflected by each pixel of the surface of the object. Thus, the albedo value represents an optical property which depends on the material of the surface of the object. The first matrix A has a number of rows which is equal to 3 x ni, where each row represents albedo values for all pixels of an initial image for a specific color channel. Thus, three rows represent the three color channels R, G, B. The first matrix A comprises a number of columns which is equal to the number of pixels in an initial image.

A second model component represents the intensity of each illumination source and is associated with a second matrix L. One illumination source is used at a time for each image acquisition. Thus, the second matrix L is a matrix where each row with a non-null value relates to the intensity value of the illumination source which is unique for each initial image. The second matrix L contains a number of rows which is equal to 3 x ni to represent the intensity value for each color channel of each initial image. The second matrix L comprises a number of columns which is equal to the value of the number np.

A third model component V represents the direction of illumination of each illumination source. The third model component comprises a third matrix V comprising three components Vx, Vy and Vz related to the orthonormal space (x, y, z). Thus, a vector (Vx, Vy, Vz) represents the direction of an illumination source during the image acquisition process. The third matrix V forces the condition of having only one specific or main illumination direction for all RGB channels for each initial image. Thus, V comprises three rows and a number of columns equal to 3 x ni. In the present invention, due to calculation constraints based on the mathematical functions f and g indicated below, the transpose matrix $V^T$ should be used. The third model component V is then applied in the functions f and g below with the form of the transpose matrix $V^T$. Thus, the third matrix V has a number of rows equal to 3 x ni, where a row represents a color channel and, as an initial image is represented with three color channels being R, G and B, an initial image is represented with three rows. The third matrix V comprises three columns where each column relates to an axis of the orthonormal space x, y, z.

A fourth model component represents the position of the three-dimensional normal or 3D normal of a pixel of an image. The 3D normal is a vector which is perpendicular to the tangent plane of the pixel. The fourth model component is associated with a fourth matrix N. The fourth matrix N comprises a number of rows which is equal to 3 related to each axis of the orthonormal space x, y, z. The fourth matrix N comprises columns which represent the coordinates of each normal of a pixel in the orthonormal space (x, y, z). The fourth matrix N comprises a number of columns which is equal to the number np.

A first mathematical formula (1) as shown below models the photometric stereo model based on the above described four model components A, L, V and N:

$$f(A, L, V, N) = A \odot L \odot (V^T N) \qquad (1)$$

where $\odot$ represents a multiplication operation in an entrywise manner wherein each value of a matrix is operated with the corresponding value of another matrix.

A, L, V and N must be retrieved with the method of the present invention to obtain f(A, L, V, N)=I.

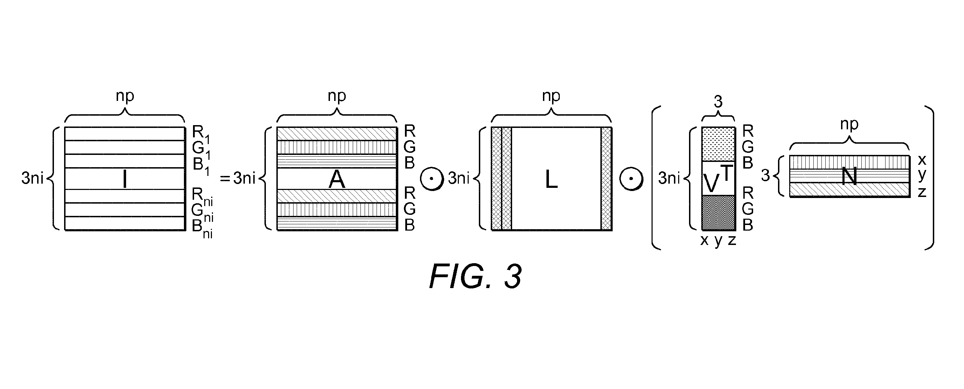

Figure 3 schematically shows the structure of each matrix, A, L, V and N.

The mathematical formula (1) may comprise an optional matrix C which is used when considering images of large size with non-uniform illumination conditions. The mathematical formula (1) may then refer to an optional mathematical formula (1a):

$$f(A, L, C, V, N) = A \odot L \odot C \odot (V^T N) \qquad (1a)$$

It will be understood that, according to an embodiment of the present invention, initial images relate to images of small size where the distribution of light may be considered to be uniform. Thus, the mathematical formula to be used does not comprise the optional matrix C and refers to the mathematical formula (1).

The above mathematical formula (1) may further comprise specific calculation optimizations to avoided increasing computation time due to the high amount of data being processed between all matrices A, N, L and $V^T$ for the four model components.

Thus, the data processor 114 further comprises a second memory component 118 for storing a database of structuring components for storing at least three structuring components which optimize calculation. The structuring components W adapt the mathematical formula (1) by considering and modeling the physical properties and constraints of the initial images by considering illumination conditions and properties of the surface of the object.

A first structuring component $W_A$ represents a same albedo coefficient for the plurality of initial images and only comprises 0 and 1 values. As each pixel of the plurality of initial images has the same albedo value for a same color channel R, G or B, the matrix $W_A$ has a number of rows which is equal to 3 x ni as shown below, for example:

$$W_A = \begin{bmatrix} 1 & 0 & 0 \\ 0 & 1 & 0 \\ 0 & 0 & 1 \\ 1 & 0 & 0 \\ 0 & 1 & 0 \\ 0 & 0 & 1 \\ 1 & 0 & 0 \\ 0 & 1 & 0 \\ 0 & 0 & 1 \end{bmatrix}$$

where ni=3

A second structuring component $W_L$ represents a same or identical intensity coefficient for all pixels of the plurality of initial images for each color channel.

Thus, as each illumination source is of equal intensity, $W_L$ is a vector having a length which equals the number np such as, for example:

$$W_L = \begin{bmatrix} 1 & 1 & 1(...)1 & 1 & 1 \end{bmatrix}$$

A third structuring component Wv represents the direction of illumination of one illumination source associated with one image from the plurality of initial images for each pixel and for each color channel.

Wv is as indicated below when considering three initial images.

$$W_V = \begin{bmatrix} 1 & 0 & 0 \\ 1 & 0 & 0 \\ 1 & 0 & 0 \\ \\ 0 & 1 & 0 \\ 0 & 1 & 0 \\ 0 & 1 & 0 \\ \\ 0 & 0 & 1 \\ 0 & 0 & 1 \\ 0 & 0 & 1 \end{bmatrix}$$

The optimization process is carried out to avoid repetitions of same rows and columns for each matrix A, L and V and is performed by breaking down each matrix A, L and V into a multiplication of model sub-components being respectively matrices A', L' and V' and a corresponding structuring component W being respectively $W_A$, Wv and $W_L$.

Thus, the model components are as follows (2):

for matrix A: A= $W_A$ .A'
for matrix L: L=L'.$W_L$
for matrix V: V=Wv.V'$^T$

Matrices A', V' and L' represent a unique set of data related to pixels for one image. Matrices $W_A$, $W_V$ and $W_L$ respectively provide the coefficient for each matrix A', V' and L' to retrieve the content of matrices A, V and L when computing the multiplications shown in (2).

Thus, the data processor 114 also operates a corresponding function g which now comprises the structuring components and model sub-components as shown in the mathematical formula (3) below:

$$g(A', L', V', N) = (W_A \times A') \odot (L' \times W_L) \odot ((W_V \times V'^T) \odot N) \quad (3)$$

where f(A, L, V, N) = g(A', L', V', N)

The aim of the present invention is to determine the values of the matrices A', L', V' and N to obtain the resulting value for g(A', L', V', N). The best resulting value is considered to be as close as possible to the value of I which represents the intensity value of initial images as taken from the image capture device 108. Thus, the function f or g has a known result which is equal to the value of I. Function g(A', L', V', N) comprises known structuring components which are $W_A$, $W_L$ and Wv. Model components A', L', V' and N must be evaluated to obtain a resulting value for g being as close as possible to the observed value I.

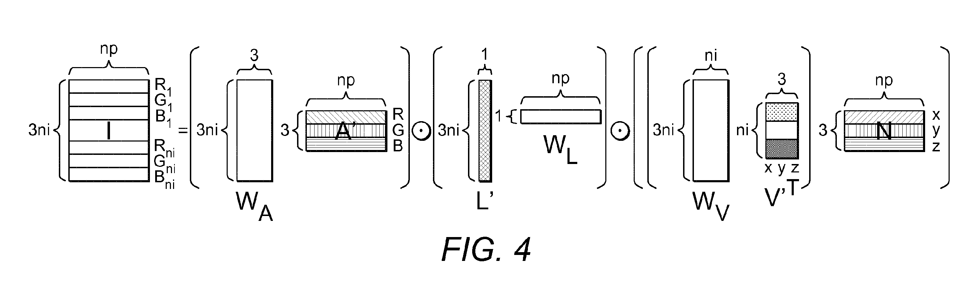

Figure 4 schematically shows the structure of each model component A', L', V', N and of the structuring components $W_A$, $W_L$ and Wv.

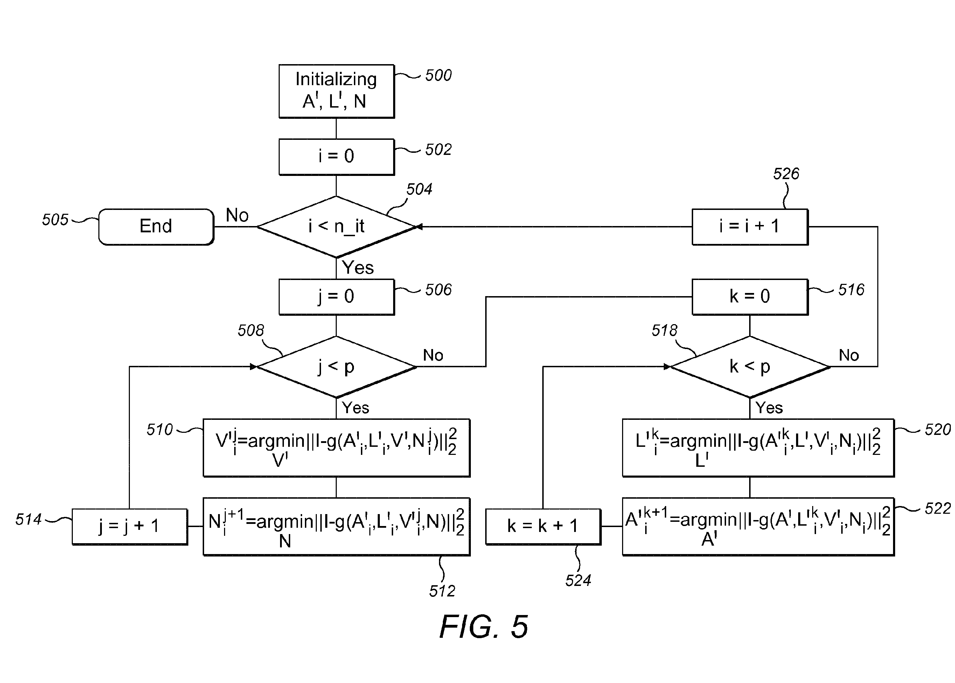

Function g(A', L', V', N) comprising model components A', L', V', N and corresponding structuring components $W_A$, $W_L$ and Wv is used in the description of the method according to Figure 5, as an embodiment of the present invention. The method according to Figure 5 may also use the function f(A, L, V, N).

Thus, the present invention provides a method for determining the values of A', L', V' or A, L, V and N in a specific manner to minimize the error between the observed intensity I and the corresponding calculated intensity g or f. The raised relief map or the representation of the surface of the observed object may then be created by using the obtained matrix N related to the fourth model component.

The method comprises operating an algorithm based on the steps as shown in Figure 5. The algorithm comprises a main loop associated with a main loop variable i and a termination condition. In the present embodiment, the termination condition comprises a number of iterations n_it of the main loop The number n_it may be equal to 10, for example. The main loop comprises inner loops being a first loop and a second loop. The first loop is associated with a first loop variable j and the second loop is associated with a second loop variable k.

In step 500, the model components A', L', N of the method are initialized to equal a corresponding determined value A'o, L'o, No.

[0082] In step 502, the value of i representing the main loop variable of the method is initialized to 0.

In step 504, the value of n_it is compared to the main loop variable i to determine if the value of n_it is greater than the value of the main loop variable i.

If the value of the number of iteration cycles n_it is greater than the value of the main loop variable i, then the process follows with step 506.

In step 506, the first loop variable j is initialized to 0.

In step 508, the value of the first loop variable j is compared to a predetermined value p associated with the first loop to determine if the value of p, such as p=5, is greater than the value of j. If the value of p is greater than the value of j, the method follows with step 510.

In step 510, an optimization process such as a minimization operation is applied. The minimization operation may comprise applying a least square minimization technique such as a quadratic loss function. In the present embodiment, a quadratic loss function is applied to obtain the quadratic error between the observed intensity I and the calculated intensity by using the function g. In step 510, the quadratic loss function is based on a variation of the value of the model component V'. In step 510, a specific value of V' is evaluated to provide the minimum difference between the observed intensity I and the function g. The model components A', L', N remain unchanged. An evaluated value of V' is determined.

In step 512, the quadratic loss function is similarly based on the variation of the value of the model component N. In step 512, a specific value of N is determined to provide the minimum difference between the observed intensity I and the function g. The model sub-components A', L', V' remain unchanged. The value V' corresponds to the evaluated value of V' from step 510. An evaluated value of N is determined.

In step 514, the first loop variable j is increased from j to j+1.

In step 508, the increased value of j is compared with the value of p. The first loop operates until the value of j is greater than the value of p. When the value of j is lower than the value of p, step 510 operates again in a new iteration of the first loop. A new evaluated value of V' is determined by the minimization operation to obtain an optimal evaluated value V' that gives the minimum difference between I and g, wherein g considers the evaluated value of N from step 512 in a previous iteration of the first loop.

In a new iteration of the first loop in step 512, a new evaluated value of N is compared with all previous evaluated values of N of step 512 to determine the evaluated value N that gives the minimum difference between I and g, wherein g considers the evaluated value of V' from step 510 in a previous iteration of the first loop.

The first loop provides optimal evaluated values for V' and N.

When the value of j is greater than the value of p, the method follows with the second loop beginning at step 516.

In step 516, the second loop variable k is initialized to 0. In step 518, the value of the second loop variable k is compared to the predetermined value p associated with the second loop to determine if the value of p is greater than the value of k. If the value of p is greater than the value of k, the method follows with step 520.

In step 520, the quadratic loss function applies with the model component L'. In step 520, a specific value of L' is evaluated to provide the minimum difference between the observed intensity I and the function g. The model sub-components A', V' and the model component N remain unchanged. The values of V' and N correspond to the optimal evaluated values of V' from the first loop which both give the minimum difference between I and g. An evaluated value of L' is determined.

In step 522, the quadratic loss function applies with the model component A'. In step 522, a specific value of A' is evaluated to provide the minimum difference between the observed intensity I and the function g. The model sub-components L', V' and the model component N remain unchanged. The value of L' corresponds to the evaluated value of L' from step 520 and the values of V' and N correspond to the optimal evaluated values of V' and N from the first loop which both give the minimum difference between I and g. An evaluated value of A' is determined.

In step 524, the second loop variable k is increased to k+1.

The second loop operates until the value of k is greater the value of p. When the value of k is lower than the value of p, step 520 operates again in a new iteration of the second loop. A new evaluated value of L' is determined by the minimization operation to obtain an optimal evaluated value L' that gives the minimum difference between I and g, wherein g considers the evaluated value of A' from step 520 in a previous iteration of the second loop.

When the value of k is greater than the value of p, the method follows with step 526 where the main loop variable i is increased to i+1.

The method then follows with step 504 to compare the number of loop iterations n_it with the value of the main loop variable i. The main loop operates until the number of iteration n_it is lower than the value of the main loop variable i. Where the value of the main loop variable i is greater than the value of the number of repetitions n_it, then the method stops.

n_it represents a specific termination condition for the present method.

An alternative termination condition may comprise a threshold value associated with the difference value obtained between the observed intensity I and the calculated intensity f(A, L, V, N) or g(A', L', V', N). Thus, the method stops when the calculated difference between I and f or I and g is equal to or below the threshold value or a threshold difference value, for example.

Another alternative termination condition may comprise a threshold difference value. When using a threshold difference value, the method stops when the difference between two values of a same model component based on two consecutive iterations is equal to or below the threshold value.

The aim of the method is to consider separately and iteratively each model component A', L', V' and N the value which gives the minimum difference in the calculation of the quadratic loss function. The method is based on main, first and second iterative loops to optimize the determination of the values of the model components A', L', V' and N. The aim of the repetition of the main loop, first loop and second loop is to reach the best convergence. Thus, for each steps 510, 512, 520 and 522, the data processor 114 operates a comparison step at each iteration of the first and second loops and for each model component. Indeed, each time the data processor 114 calculates the quadratic loss function to obtain a difference value when increasing a specific model component, the data processor 114 compares the difference value obtained with any existing difference value previously obtained. Thus, the data processor 114 may determine the minimum difference value and retain the minimum difference value for further calculations.

The value of the number of iterations p is a determined number which may be the same for j and k. The first loop relates to model components V and N and the second loop relates to model components A and L for a better optimization of the method.

Model components V, N relate to interaction between the direction of the surface of the object and the direction of the illumination sources (104, 105, 106). Such interaction determines an angle between both directions. Calculations related to the determination of such an angle are relatively complex to run due to the size of the corresponding matrices.

Thus, the first loop provides calculations regarding model components V and N or V' and N to optimize calculations and computation time associated with the second loop. Indeed, the second loop provides calculations regarding model components A and L. A corresponds to a weighting coefficient associated with the surface of the object. L corresponds to a weighting coefficient associated with the illumination source. Thus, calculations related to such model components are relatively easy to run due to the size of the corresponding matrices.

The arrangement of the model components A, L, V, N or A', L', V' N in such a first and second loop provides a better convergence of the method. Thus, computation time is reduced when compared with a different arrangement of the model components A, L, V, N or A', L', V', N for carrying out the optimization process such as the minimization operation.

When all iterations of main loop, first loop and second loop have been processed, the method stops.

The data processor 114 retrieves the value of N as determined from the method of the present invention. The data processor 114 then builds a surface pixel by pixel by considering the value of N for each pixel by applying one of the algorithms disclosed in the prior art documents below:

Ronen Basri, David W. Jacobs, Ira Kemelmacher: Photometric Stereo with General, Unknown Lighting. International Journal of Computer Vision 72(3), p.239-257 (2007);

Peter Kovesi: Shapelets Correlated with Surface Normals Produce Surfaces. ICCV 2005: p.994-1001 (2005);

Robert T. Frankot, Rama Chellappa : A method for enforcing integrability in shape from shading algorithms. IEEE Transactions on Pattern Analysis and Machine Intelligence 10, p.439-451 (1988); or

Coleman, Jr. & Jain: Obtaining 3-dimensional shape textured and specular surfaces using four-source photometry.

Computer-Graphics and Image Processing, 18, pp. 309-328 (1982).

Thus, the data processor 114 provides a raised relief map of the surface of the considered object.

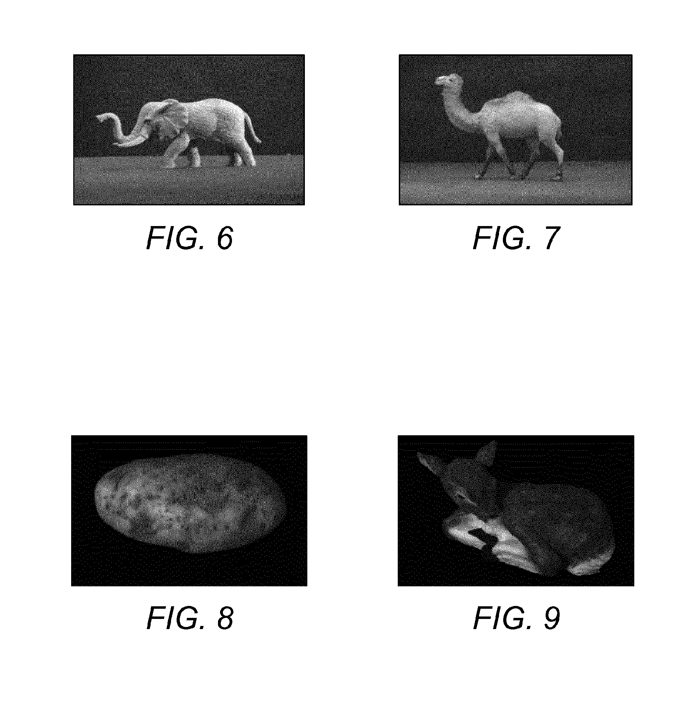

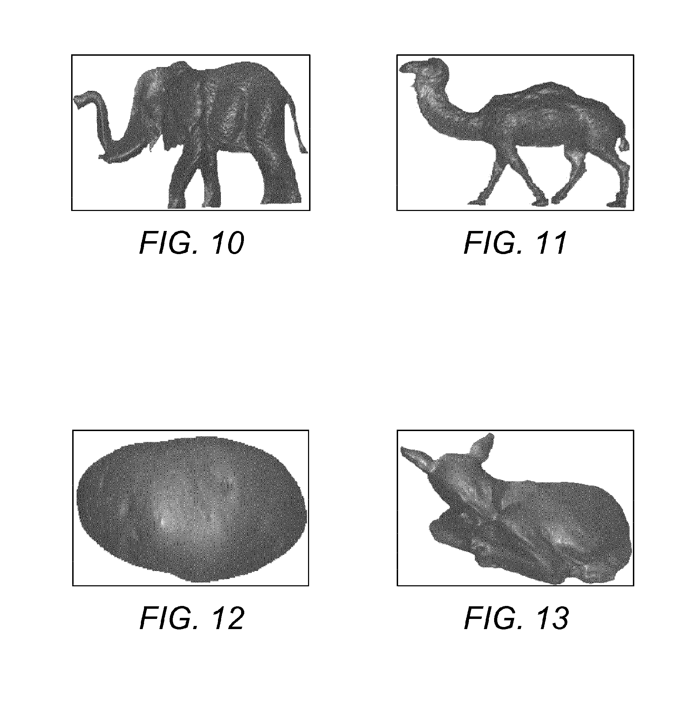

Figures 6, 7, 8 and 9 each show an initial image of first objects. Figures 10, 11, 12 and 13 show raised relief maps of the surface of the objects of Figures 6, 7, 8 and 9 according to the present invention. In this embodiment, the number of loop iterations is n_it = 10 and the value of the first and second loop variables is p = 5.

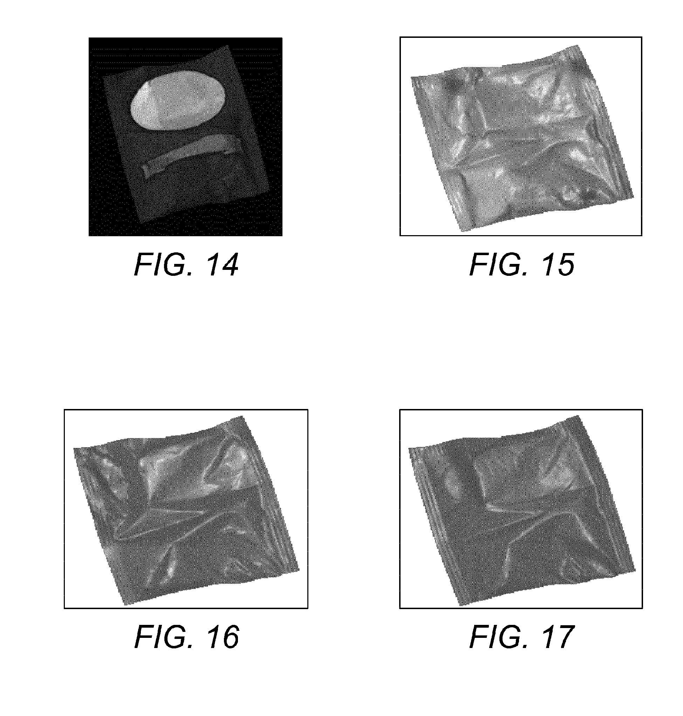

The present method ensures that a better evaluation of the model component A', L', V' and N is provided when considering a significant number of good quality images. In addition, an even spatial distribution of the illumination sources during image acquisition provides better results. Figure 14 represents an initial image of an object being a tea bag. Figure 15 shows a raised relief map of the object of Figure 14 when considering three initial images of the object shown in Figure 14. Figure 16 shows a raised relief map of the object of Figure 14 when considering five initial images of the object shown in Figure 14. Figure 17 shows a raised relief map of the object of Figure 14 when considering ten initial images of the object shown in Figure 14. From a visual check, the raised relief map in Figure 17 comprises more details of the object than the raised relief maps in Figures 15 and 16. Visual results of analysis of the surfaces of the raised relief maps indicate an improved quality of the raised relief maps with no significant impact on the general surface aspect when compared to the initial image.

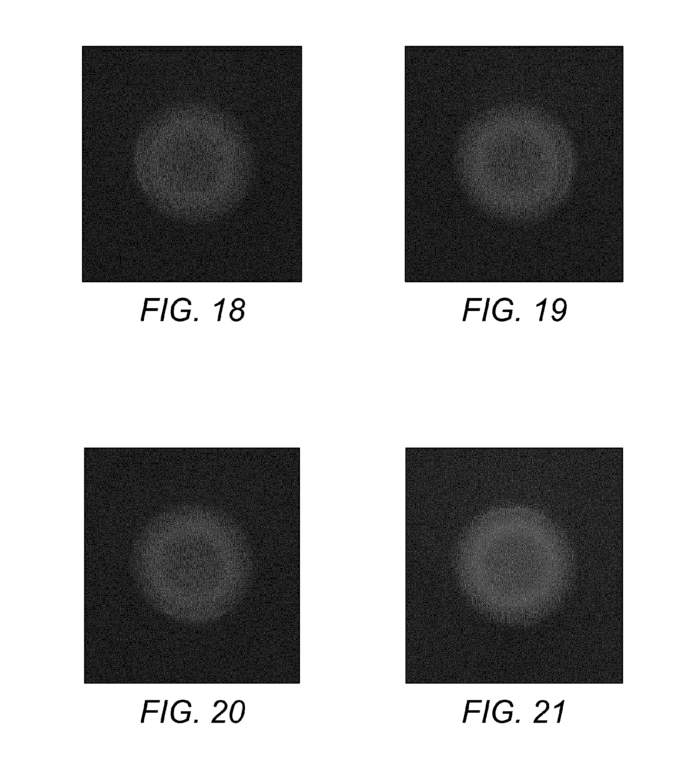

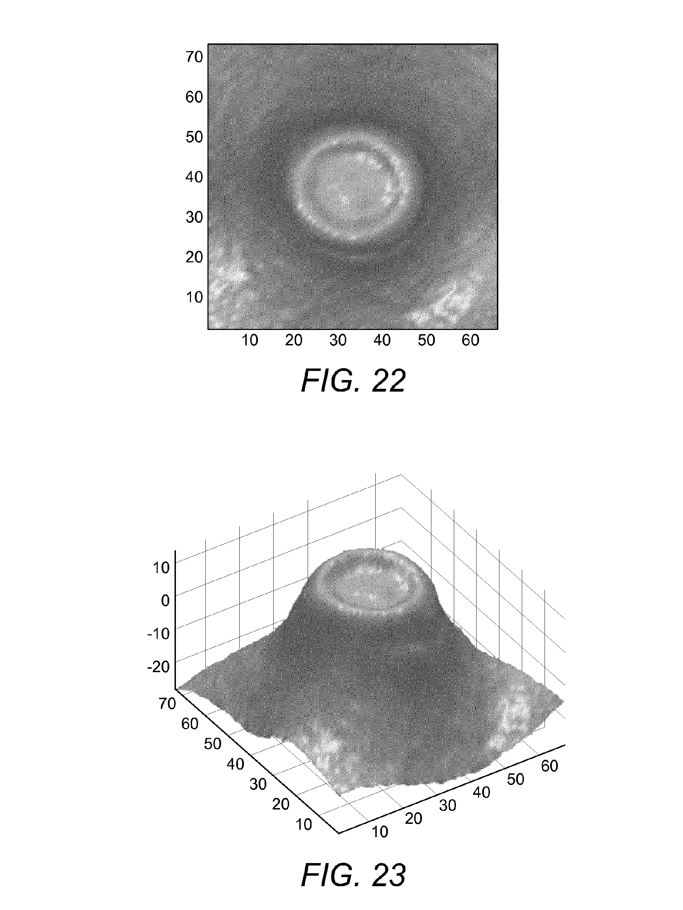

Figures 18, 19, 20 and 21 show initial images of a first object being a micro-organism. Figure 22 shows a top view of the raised relief map of the surface of the object of Figures 18, 19, 20 and 21.

Figure 23 represents a side view of the object of Figure 22.

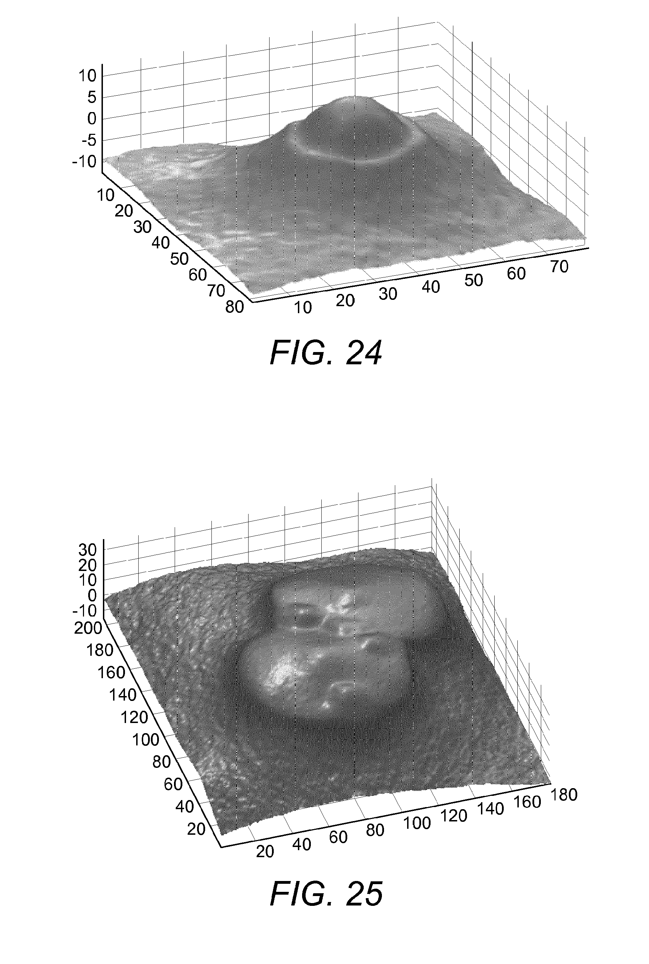

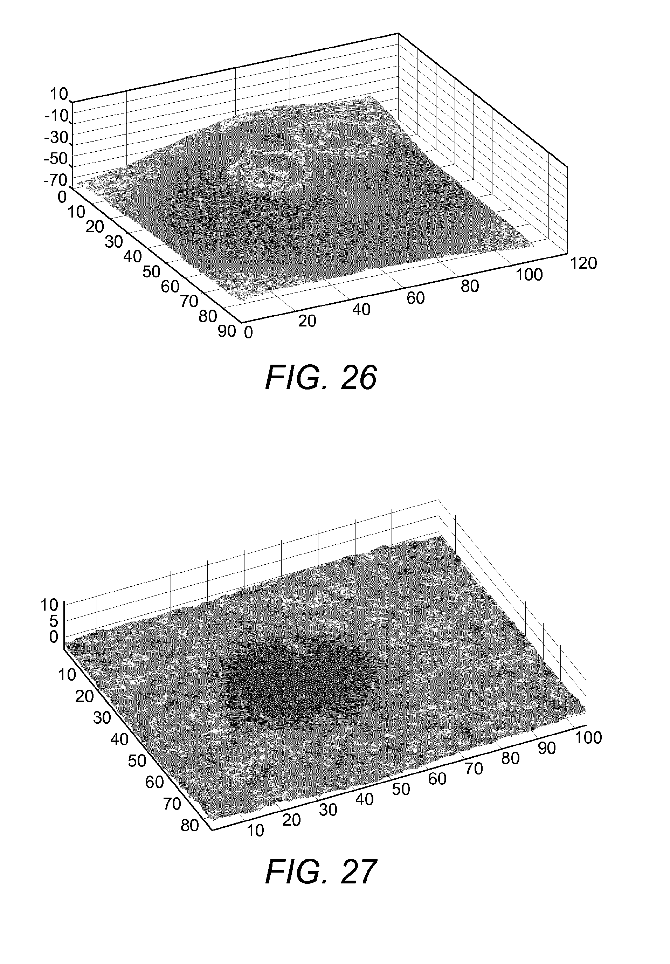

Figures 24, 25, 26 and 27 represent raised relief maps of various objects such as micro-organisms according to the present invention.

A specific image processing method for improving the quality of initial images may be implemented with the present invention to improve the quality of initial images that will be used in the present invention. Such an image processing method may remove any dark zones or bright zones within initial images, such zones comprising pixel values that may lead to incorrect representation of the deepness map.

**Claims**

1. A method for obtaining a model of an object surface from a plurality of images of said object (107), wherein the object (107) is illuminated with one or more illumination sources (104, 105, 106), the method comprising:

   - obtaining a set of images each comprising an array of pixels and representing similar views of an object, wherein the similar views are obtained under different illumination conditions;
   - defining a model function (f) that expresses the known pixel intensity values of the images in terms of the following unknown model components:

      - a first model component (A) representing the albedo of the object (107) at each pixel location and being the same for the plurality of images and being an albedo value;
      - a second model component (L) representing an intensity of illumination for each image and being an illumination source intensity value being the same for all pixels of each image;
      - a third model component (V) representing a specific illumination direction and being different for each image and being an illumination vector being the same for all pixels of each image;
      - a fourth model component (N) representing surface normal directions of the object surface at each pixel position and being the same for all images and being a normal vector;

      - performing one or more sequences of minimization operations to minimize a difference function between the pixel values obtained from the set of images and pixel values calculated using said model function (f), each minimization operation being performed by allowing one of said model components (A, L, V, N) to vary while the others remain unchanged;
      - outputting the fourth model component (N) as said model of the object surface.

2. The method as claimed in claim 1, wherein said sequence of minimization operations comprises an iterative loop in which each of said model components (A, L, V, N) is varied in turn at least once before a subsequent iteration, said iterative loop being repeated until a termination condition is met.

3. The method as claimed in claim 2, wherein said iterative loop comprises one or more inner loops wherein a subset of said model components (V, N) are varied plural times before proceeding to vary another subset of said model components (A, L).

4. The method as claimed in claim 3, wherein one inner loop comprises varying said third model component (V) and said fourth model component (N) plural times.

5. The method as claimed in claim 3, wherein one inner loop comprises varying said first model component (A) and said second model component (L).

6. The method as claimed in any preceding claims, wherein minimization operations are performed, varying said third model component (V) and said fourth model component (N) plural times before minimization is performed, varying said first model component (A) and said second model component (L).

7. The method as claimed in any preceding claims, wherein the first model component (A) comprises a first model sub-component (A') and a first structuring component ($W_A$), wherein the first structuring component ($W_A$) adapts the first model sub-component (A') to reproduce the surface properties of the object (107).

8. The method as claimed in any preceding claims, wherein the second model component (L) comprises a second model sub-component (L') and a second structuring component ($W_L$), wherein the second structuring component ($W_L$) adapts the second sub-component (L') to reproduce the illumination conditions of the illumination sources (104, 105, 106).

9. The method as claimed in any preceding claims, wherein the third model component (V) comprise a third model sub-component (V') and a third structuring component (Wv), wherein the third structuring component (Wv) adapts the third model sub-component (V') to reproduce the illumination conditions of the illumination sources (104, 105, 106).

10. The method as claimed in claim 7, wherein the first structuring component ($W_A$) represents a same coefficient for the plurality of images comprising the same albedo value for each pixel for the plurality of images.

11. The method as claimed in claim 8, wherein the second structuring component ($W_L$) represents a same intensity coefficient for all pixels of an image from the plurality of images.

12. The method as claimed in claim 9, wherein the third structuring component (Wv) represents the direction of illumination of one illumination source (104, 105, 106) associated with one image of said plurality of images and being the same for all pixels of an image from the plurality of images.

13. The method as claimed in any preceding claims, wherein the one or more illumination sources (104, 105, 106) comprise Red, Green and Blue color channels.

14. The method as claimed in claim 13, wherein the first model component (A) is the same for each pixel and each color channel for the plurality of images and the second model component (L) is the same for each color channel for all pixels of each image.

15. The method as claimed in claim 13, wherein the first structuring component ($W_A$) comprises the same albedo value for each pixel for each color channel for the plurality of images.

16. The method as claimed in claim 13, wherein the second structuring component ($W_L$) represents a same intensity coefficient for each color channel for all pixels of each image.

17. The method as claimed in any of claims 7 to 12, wherein model function (f) comprises a modified model function (g), wherein the model function (f) related to the first, second, third and fourth model components (A, L, V, N) is equal to the modified model function (g) related to the first, second and third model sub-components (A', L', V') and the fourth model component (N).

18. A computer program product comprising instructions for causing a programmable data processing apparatus to perform steps of the method according to claims 1 to 17.

19. An imaging system (100) for obtaining a model of an object surface from a plurality of images of said object (107), the imaging system (100) comprising:

- one or more illumination sources (104, 105, 106) to illuminate the object (107) with different directions of illumination, wherein each image is associated with a determined direction of illumination;
- an image capture device (108) for detecting the pixel values of each pixel in each image of the plurality of images;
- a data processor (114) comprising a first memory component (116) for storing the following unknown model components:

- a first model component (A) representing the albedo of the object (107) at each pixel location and being the same for the plurality of images and being an albedo value;
- a second model component (L) representing an intensity of illumination for each image and being an illumination source intensity value and being the same for all pixels of each image;
- a third model component (V) representing a specific illumination direction and being different for each image and being an illumination vector being the same for all pixels of each image;
- a fourth model component (N) representing surface normal directions of the object surface at each pixel position and being the same for all images and being a normal vector;

wherein the data processor (114) performs one or more sequences of minimization operations to minimize a difference function between the received pixel values over the set of images and pixel values calculated using a defined model function (f) that expresses the known pixel values of images in terms of the unknown model components;
and
wherein each minimization operation is performed by allowing one of said model components (A, L, V, N) to vary while the other model components remain fixed and
for outputting the normal model component (N) as said model of the object surface.

20. An imaging system (100) as claimed in claim 19, wherein the data processor (114) further comprises a second memory component (118) for storing structuring components ($W_A$, $W_V$, $W_L$) to adapt one or more of the model sub-components (A', L', V') to reproduce the surface properties of the object (107) and the illumination conditions of the illumination sources (104, 105, 106).

FIG. 1

100   102

103   105

104   106

112   108

114   116

110

FIG. 2

*FIG. 3*

*FIG. 4*

EP 2 806 399 A1

Initializing $A^I, L^I, N$ — *500*

$i = 0$ — *502*

*505* — End

No

$i < n\_it$ — *504*

$i = i + 1$ — *526*

Yes

$j = 0$ — *506*

$k = 0$ — *516*

*508* — $j < p$

No

*518* — $k < p$

No

Yes

Yes

*510* — $V^{Ij}_i = \underset{V^I}{\arg\min}\|I - g(A^I_i, L^I_i, V^I, N^j_i)\|_2^2$

$L^{Ik}_i = \underset{L^I}{\arg\min}\|I - g(A^{Ik}_i, L^I, V^I_i, N_i)\|_2^2$ — *520*

*514* — $j = j + 1$

$N^{j+1}_i = \underset{N}{\arg\min}\|I - g(A^I_i, L^I_i, V^{Ij}_i, N)\|_2^2$

$k = k + 1$

$A^{Ik+1}_i = \underset{A^I}{\arg\min}\|I - g(A^I, L^{Ik}_i, V^I_i, N_i)\|_2^2$ — *522*

*512*

*524*

## FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

**EUROPEAN SEARCH REPORT**

Application Number

EP 13 30 5672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GERORGHIADES A. S.: "Recovering 3-D shape and reflectance from a small number of photographs", PROCEEDINGS OF THE 14TH EUROGRAPHICS WORKSHOP ON RENDERING, 2003, pages 230-240, XP040167477, * page 233, left-hand column, line 30 - page 235, left-hand column, line 21 * | 1-20 | INV. G06T7/00 |
| A | T. HABER ET AL: "Image-Based Acquisition of Shape and Spatially Varying Reflectance", PROCEDINGS OF THE BRITISH MACHINE VISION CONFERENCE 2008, 1 January 2008 (2008-01-01), pages 81.1-81.10, XP055089526, DOI: 10.5244/C.22.81 * page 80.4, line 18 - page 80.7, line 15 * | 2 | |
| A | CARLOS HERNANDEZ ET AL: "Overcoming Shadows in 3-Source Photometric Stereo", TRANSACTIONS ON PATTERN ANALYSIS AND MACHINE INTELLIGENCE, IEEE, PISCATAWAY, USA, vol. 33, no. 2, 1 February 2011 (2011-02-01), pages 419-426, XP011340203, ISSN: 0162-8828, DOI: 10.1109/TPAMI.2010.181 * page 423, left-hand column, paragraph f * | 13,14 | TECHNICAL FIELDS SEARCHED (IPC) G06T |
| A | WO 2009/125883 A1 (HANKUK UNIVERSITY OF FOREIGN S [KR]; YUN IL DONG [KR]) 15 October 2009 (2009-10-15) * paragraph [0005] - paragraph [0006] * | 7-12, 15-17 | |

-/--

The present search report has been drawn up for all claims

| Place of search | Date of completion of the search | Examiner |
|---|---|---|
| Munich | 2 December 2013 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 5672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FASHENG LI ET AL: "Reflectance and Light Source Position Estimation from a Sparse Set of Images", DIGITAL MEDIA AND ITS APPLICATION IN MUSEUM&HERITAGE, SECOND WORKS HOP ON, IEEE, PI, 1 December 2007 (2007-12-01), pages 106-113, XP031199270, ISBN: 978-0-7695-3065-9 * page 107, left-hand column, line 19 - page 109, right-hand column, line 20 * | 1-20 | |
| A | CHIA-PING CHEN ET AL: "The 4-Source Photometric Stereo Under General Unknown Lighting", 1 January 2006 (2006-01-01), COMPUTER VISION - ECCV 2006 LECTURE NOTES IN COMPUTER SCIENCE;;LNCS, SPRINGER, BERLIN, DE, PAGE(S) 72 - 83, XP019036525, ISBN: 978-3-540-33836-9 * page 75, last paragraph - page 79, last line * | 1-20 | |
| | | | **TECHNICAL FIELDS SEARCHED (IPC)** |

The present search report has been drawn up for all claims

| Place of search | Date of completion of the search | Examiner |
|---|---|---|
| Munich | 2 December 2013 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5672

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2013

| Patent document cited in search report | Publication date | Patent family member(s) | Publication date |
|---|---|---|---|
| WO 2009125883 A1 | 15-10-2009 | US 2011028183 A1<br>WO 2009125883 A1 | 03-02-2011<br>15-10-2009 |

EPO FORM P0459

For more details about this annex : see Official Journal of the European Patent Office, No. 12/82

**REFERENCES CITED IN THE DESCRIPTION**

**Patent documents cited in the description**

- EP 2520923 A

**Non-patent literature cited in the description**

- **WOODHAM, R.J.** Photometric method for determining surface orientation from multiple images. *Optical engineering,* 1980, vol. 19, 513-531
- **HAYAKAWA, H.** Photometric stereo under a light source with arbitrary motion. *Society of America,* 1994, vol. 11, 3079-3088
- **RONEN BASRI ; DAVID W. JACOBS.** Ira Kemelmacher: Photometric Stereo with General, Unknown Lighting. *International Journal of Computer Vision,* 2007, vol. 72 (3), 239-257
- **PETER KOVESI.** Shapelets Correlated with Surface Normals Produce Surfaces. *ICCV,* 2005, 994-1001
- **ROBERT T. FRANKOT ; RAMA CHELLAPPA.** A method for enforcing integrability in shape from shading algorithms. *IEEE Transactions on Pattern Analysis and Machine Intelligence,* 1988, vol. 10, 439-451
- **COLEMAN, JR. ; JAIN.** Obtaining 3-dimensional shape textured and specular surfaces using four-source photometry. *Computer-Graphics and Image Processing,* 1982, vol. 18, 309-328